# EUROPEAN PATENT APPLICATION

(11) **EP 0 973 118 A2**
(43) Date of publication of application: **19.01.2000**
(21) Application number: 99112883.6
(22) Date of filing: 03.07.1999
(51) Int. Cl.: G06K 7/10

(54) **Fingerprint checking system, fingerprint checking method and memory card used for the same**

(30) Priority: 07.07.1998 JP 19179798
(71) Applicant: Lsi Card Corporation, Osaka 556-0005 (JP)
(72) Inventor: Ohki, Sinji, c/o LSI Card Corporation, Osaka 556-0005 (JP)
(74) Representative: Dallmeyer, Georg, Dipl.-Ing.

(57) **Abstract**

A fingerprint checking system having a memory card for registering encoded fingerprint information, a fingerprint characteristic detecting section for detecting fingerprint information (characteristic point data), a card reader for reading and decoding the fingerprint information registered in the memory card, and a checking and deciding section for deciding coincidence/non-coincidence of the detected fingerprint information and the read and decoded fingerprint information and for outputting a result of the decision. Only in the case where a predetermined password is input through a keyboard, the fingerprint information can be read from the memory card.

## Description

### BACKGROUND OF THE INVENTION

The present invention relates to a fingerprint checking system and a fingerprint checking method which are to be utilized for identifying a person, and a memory card to be used for the same.

In recent years, how the security of information stored in an information system itself or a computer is protected with the spread of the information system over the public at large has been a problem. Examples of a method for ensuring such security include security management utilizing a person checking system for deciding whether or not a person is permitted to enter a room by an ID card or a password number during entrance.

However, since such a personal checking system only decides whether the ID card or password number is correct or not, it cannot cope with the case where the ID card or password number is used unfairly. Therefore, troubles are made for ensuring security. For this reason, there has been required a method for recognizing each person based on his (or her) peculiar characteristics.

A fingerprint is peculiar to a person and is unchangeable all his (or her) life. Therefore, the use of the fingerprint to specify the person is a very effective method. For this reason, research and development have proceeded in relation to a fingerprint checking system for checking the fingerprint to identify the person.

For example, in the case where the fingerprint checking system is utilized for the management to get into or out of a building or a room, fingerprint information about a specific user is first registered in advance, the user's fingerprint information is detected each time the user gets in and out, the detected fingerprint information is checked with the registered fingerprint information, and it is confirmed that the person has been permitted if the fingerprint information are coincident with each other.

In such a fingerprint checking system, in the case where each user's fingerprint information is registered in a host computer such as a center, it takes plenty of time to read the registered fingerprint information when checking the fingerprint information so that efficiency is poor. Therefore, it is convenient that each user carries a memory card which has registered his (or her) fingerprint information to read fingerprint information to be checked from the memory card.

When utilizing the fingerprint checking system, probably, the user is anxious that his (or her) registered fingerprint information might be read from the memory card by a third person and be used for other purposes. It can be said that this kind of anxiety suppresses the spread of the fingerprint checking system.

### BRIEF SUMMARY OF THE INVENTION

It is an object of the present invention to provide a fingerprint checking system and a fingerprint checking method which can prevent the third person from reading fingerprint information registered in a memory card, and the memory card to be used for the same.

It is another object of the present invention to provide a fingerprint checking system and a fingerprint checking method in which the user's registered fingerprint information does not leak out, and a memory card to be used for the same.

In the present invention, encoded fingerprint information is registered in a memory card, it is decided whether or not actually detected fingerprint information is coincident with fingerprint information obtained by decoding and reading the fingerprint information registered in the memory card, and a result of the decision is output. Since the fingerprint information for checking is encoded and registered in the memory card, the security of the user's fingerprint information can be rapidly enhanced.

A card reader for reading fingerprint information from the memory card and a deciding section for deciding the coincidence/non-coincidence are constituted by a semiconductor integrated circuit. The card reader and the deciding section are formed into one chip. Accordingly, only a result of the decision of coincidence or non-coincidence is output and the fingerprint information read by the card reader is not output to the outside. Therefore, the secrecy of the fingerprint information is excellent.

The result of the decision of coincidence or non-coincidence is a signal for controlling on/off of operation of an external apparatus and the fingerprint information registered in the memory card is not read out. Consequently, the secrecy of the fingerprint information is excellent.

Historical information about the reading operation of the fingerprint information is written to the memory card by a card writer. Therefore, time management for getting into or out of a room can be performed by the memory card, for example.

Only in the case where a predetermined password is input to the card reader, the fingerprint information can be read from the memory card. A third person which does not know the predetermined password can be prevented from reading the fingerprint information using a user's memory card. Therefore, the secrecy of the fingerprint information is excellent.

By utilizing, as a memory card, a non-contact type memory card capable of reading/writing information between a reader/writer in non-contact, it is possible to prevent abnormal reading from being caused by defective contact with the reader, pick-up of static electricity or the like, thereby performing an excellent reading process of the fingerprint information.

The above and further objects and features of the invention will more fully be apparent from the following detailed description with accompanying drawings.

### BRIEF DESCRIPTION OF THE SEVERAL VIEWS OF THE DRAWINGS

FIG. 1 is a diagram showing the structure of a fingerprint checking system according to the present invention;
FIG. 2 is a schematic diagram showing the structure of a fingerprint characteristic detecting section;
FIG. 3 is a diagram showing the structure of a device to be used for registering fingerprint information in a memory card;
FIG. 4 is a flow chart showing the operation procedure for registering the fingerprint information in the memory card; and
FIG. 5 is a flow chart showing the procedure to be performed at the time of entrance management utilizing the fingerprint checking system according to the present invention.

### DETAILED DESCRIPTION OF THE INVENTION

An embodiment of the present invention will be specifically described below with reference to the drawings.

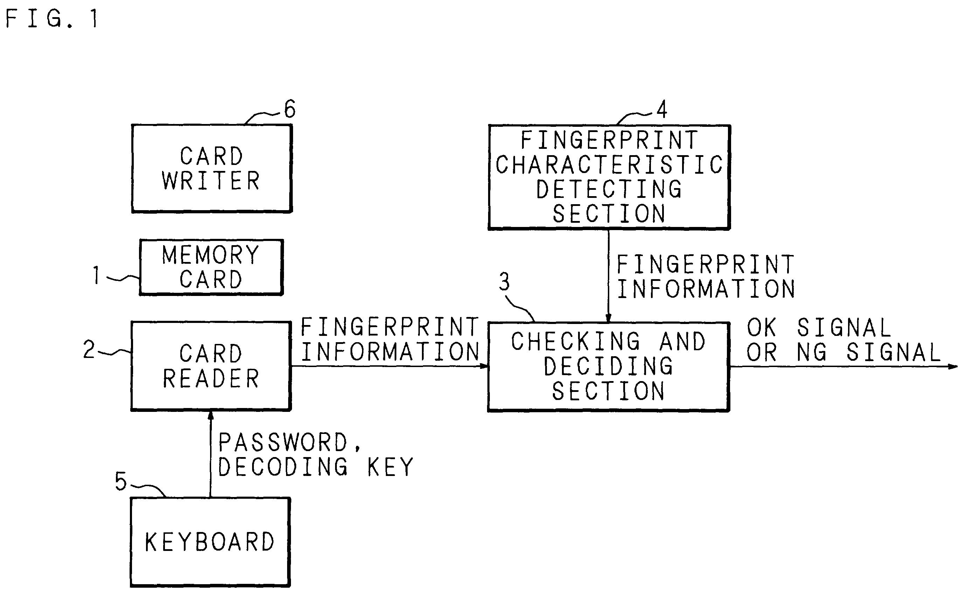

FIG. 1 is a diagram showing the structure of a fingerprint checking system according to the present invention. In FIG. 1, the reference numeral 1 denotes a memory card in which a user's fingerprint information is encoded and registered. Each user carries his (or her) own memory card 1. The fingerprint information registered in the memory card 1 are data on characteristic points (end points, branch points and the like) of a fingerprint. The fingerprint information is read out by a card reader 2 in non-contact through electromagnetic force, for example. The card reader 2 decodes the read fingerprint information (characteristic point data), and then outputs the same fingerprint information to a checking and deciding section 3.

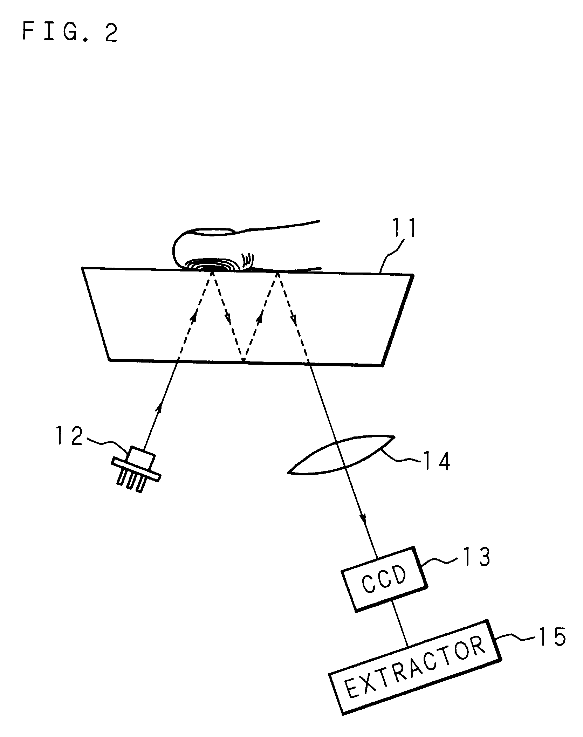

The reference numeral 4 denotes a fingerprint characteristic detecting section for obtaining data on the characteristic points of the user's actual fingerprint. FIG. 2 is a schematic diagram showing the structure of the fingerprint characteristic detecting section 4. The fingerprint characteristic detecting section 4 includes a prism 11 on which the user puts his (or her) finger, a light source (LED) 12 for irradiating light on the put finger, an image pick-up device (CCD) 13 for obtaining image data on the fingerprint, a lens 14 for forming an image of the light reflected from the prism 11 onto the image pick-up device 13, an extractor 15 for extracting the characteristic point data on the fingerprint from the image data obtained by the image pick-up device 13, and the like. The fingerprint characteristic detecting section 4 outputs the detected characteristic point data of the fingerprint to the checking and deciding section 3.

The checking and deciding section 3 checks characteristic point data registered in the memory card 1 and the actually detected characteristic point data, and outputs a result of the checking. In this case, the checking and deciding section 3 outputs a coincidence signal (an OK signal) if both of the characteristic point data are coincident with each other, and outputs a non-coincidence signal (an NG signal) if both of them are not coincident with each other. In the present invention, it is important that the checking and deciding section 3 outputs only the OK or NG signal and never outputs the fingerprint information (characteristic point data).

A keyboard 5 for a user to input a password and a decoding key is connected to the card reader 2. Only in the case where a correct password peculiar to the user is input through the keyboard 5, the card reader 2 can read the encoded fingerprint information (characteristic point data) from the memory card 1, and can decode the encoded fingerprint information by using the decoding key input from the keyboard 5.

Each time the registered fingerprint information (characteristic point data) are read from the memory card 1 by means of the card reader 2, a card writer 6 writes historical information about the reading process (including at least time and date data) to the memory card 1 in non-contact through electromagnetic force, for example.

The card reader 2 and the checking and deciding section 3 are constituted by a semiconductor integrated circuit, and both of them are formed into one chip and have a structure in which the fingerprint information (characteristic point data) do not leak out.

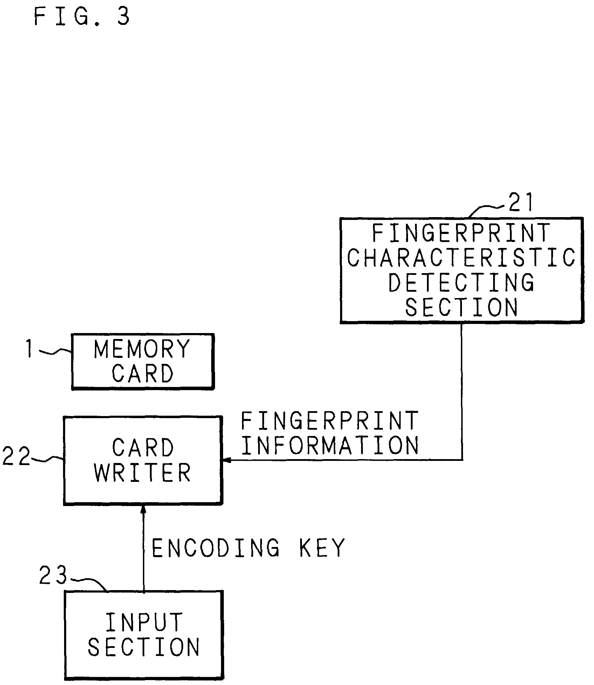

FIG. 3 is a diagram showing the structure of a device for registering the user's fingerprint information (characteristic point data) in the memory card 1 in advance. In the drawing, the reference numeral 21 denotes a fingerprint characteristic detecting section having the same structure (see FIG. 2) as that of the fingerprint characteristic detecting section 4 in the above-mentioned fingerprint checking system (FIG. 1). The fingerprint characteristic detecting section 21 outputs the detected fingerprint information (characteristic point data) to a card writer 22. An input section 23 for the user to input an encoding key is connected to the card writer 22.

The card writer 22 encodes the fingerprint information (characteristic point data) sent from the fingerprint characteristic detecting section 21 by using the input encoding key, and writes the encoded fingerprint information (characteristic point data) to the memory card 1 in non-contact through electromagnetic force, for example.

Next, the operation of the fingerprint checking system according to the present invention will be described by taking, as an example, the case where the management for the user to get into and out of a computer control room is performed.

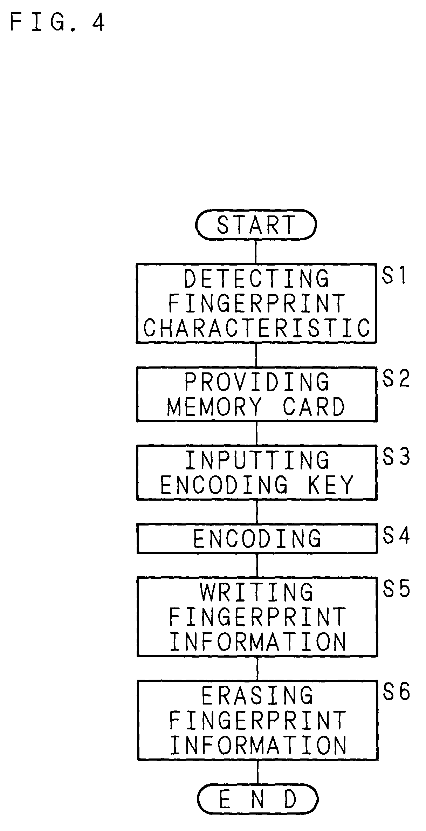

For each user which is permitted to get into the computer control room, the peculiar memory card 1 in which each user's fingerprint information is registered is prepared in advance. FIG. 4 is a flow chart showing the operation procedure for registering the fingerprint information in the memory card 1.

First of all, the user's fingerprint information (characteristic point data) is detected by the fingerprint characteristic detecting section 21 (Step S1). More specifically, when the user puts his (or her) finger on the prism 11 of the fingerprint characteristic detecting section 21, rays are irradiated on the finger from the light source 12 through the prism 11, and the image of the reflected light is formed on the image pick-up device 13 through the prism 11 and the lens 14 to obtain the image data on the fingerprint. Based on the image data, the user's fingerprint information (characteristic point data) is obtained by the extractor 15. The detected fingerprint information (characteristic point data) is output to the card writer 22.

Next, the memory card I is provided apart from the card writer 22 by a proper distance (Step S2). The user inputs the peculiar encoding key through the input section 23 (Step S3). By utilizing the encoding key, the user's detected fingerprint information (characteristic point data) is encoded by the card writer 22 (Step S4).

The encoded fingerprint information (characteristic point data) is written to the memory card 1 in non-contact by the card writer 22 (Step S5). When the process of writing to the memory card 1 is completed, the detected fingerprint information (characteristic point data) is erased from the card writer 22 (Step S6). The fingerprint information thus detected is registered in only the memory card 1 so as not to remain in other portions. Accordingly, it is possible to prevent the user's fingerprint information from leaking out after the registering process.

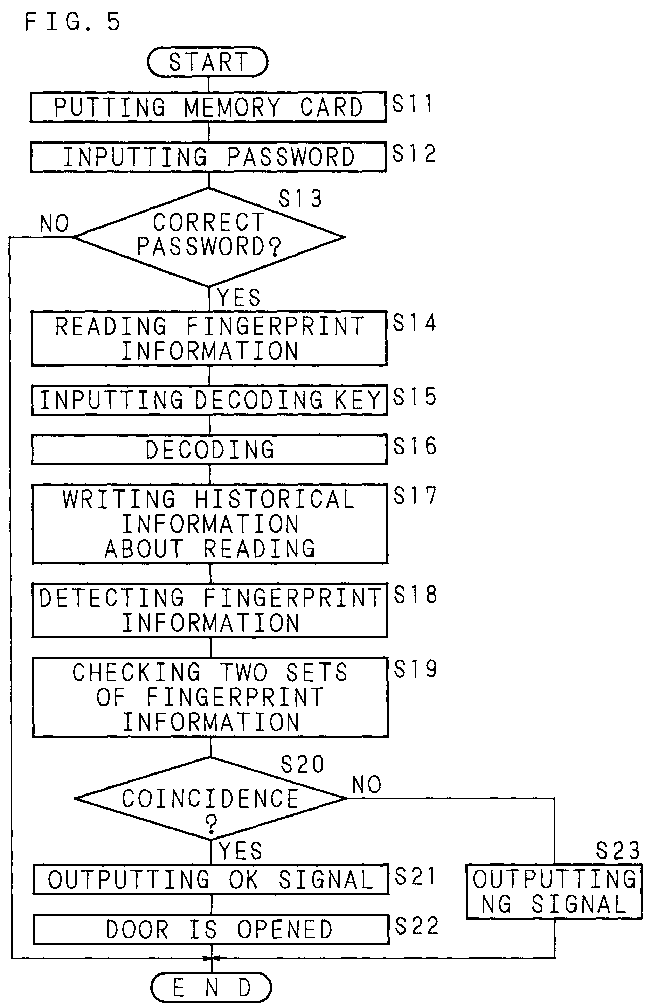

Next, there will be described the actual management for the user to get into and out of the computer control room using the fingerprint checking system according to the present invention. FIG. 5 is a flow chart showing the procedure for the entrance management.

When getting into the computer control room, the user carries the memory card 1 in which his (or her) own fingerprint information (characteristic point data) is registered, and puts the memory card 1 apart from the card reader 2 by a proper distance (Step S11). Then, the user inputs a password to the card reader 2 by means of the keyboard 5 (Step S12). It is decided whether or not the input password is a predetermined one (Step S13). If the input password is different from the predetermined one (Step S13 : NO), no process is performed.

On the other hand, if the input password is coincident with the predetermined one (Step S13 : YES), the encoded fingerprint information (characteristic point data) registered in the memory card 1 is read out in non-contact by the card reader 2 (Step S14). The user inputs the decoding key by means of the keyboard 5 (Step S15). Based on the decoding key, the encoded fingerprint information (characteristic point data) is decoded (Step S16). The decoded fingerprint information (characteristic point data) is input to the checking and deciding section 3. When such reading and decoding processes for the fingerprint information are completed, the historical information is written to the memory card 1 in non-contact by the card writer 6 (Step S17).

Then, the user's actual fingerprint information (characteristic point data) is detected by the fingerprint characteristic detecting section 4 (Step S18). More specifically, in the same manner as in the above-mentioned fingerprint characteristic detecting section 21, when the user puts his (or her) finger on the prism 11 of the fingerprint characteristic detecting section 4, rays are irradiated on the finger from the light source 12 through the prism 11, and the image of the reflected light is formed on the image pick-up device 13 through the prism 11 and the lens 14 to obtain the image data on the fingerprint. Based on the image data, the user's fingerprint information (characteristic point data) is obtained by the extractor 15. The detected fingerprint information (characteristic point data) is output to the checking and deciding section 3.

In the checking and deciding section 3, the registered fingerprint information (characteristic point data) and the actually detected fingerprint information (characteristic point data) are checked (Step S19). As a result of the checking, if both of the fingerprint information are coincident with each other (Step S20 : YES), an OK signal is output as a switch output (Step S21). In response to the OK signal, the door of the computer control room is opened (Step S22). On the other hand, if both of the fingerprint information are not coincident with each other (S20 : NO), an NG signal is output as a switch output (Step S23) and the door is kept closed. In this state, the process is completed.

As described above, only in the case where the entrance management is performed, a correct password is input and the registered fingerprint information and the actually detected fingerprint information are coincident with each other, the user is permitted to enter the room. Consequently, the person can be confirmed strictly. Therefore, it is possible to completely prevent a third person from posing as the person to perform an unfair practice such as the abuse of the memory card 1 picked up.

In the present invention, only the user himself (or herself) can read the registered data (fingerprint information) from the memory card 1. Therefore, the user's fingerprint information does not leak out. Even if the user loses the memory card 1, the third person picking up the same memory card 1 cannot obtain the fingerprint information.

Furthermore, only the result of checking (switch output) of the coincidence/non-coincidence of the registered fingerprint information and the actual fingerprint information is output to the outside and the fingerprint information itself is not output to the outside. Therefore, it is possible to sweep away the user's anxiety that his (or her) own fingerprint information might be abused. For example, in the case where the fingerprint checking system is employed in a company, the staff's fingerprint information is not abused in office and after retirement if the staff creates his (or her) peculiar memory card 1 when entering a company, utilizes the memory card 1 in office and disposes of the memory card 1 at the time of the retirement.

The historical information about the process of reading the registered fingerprint information is written to and recorded in the memory card 1. Therefore, the user's entrance record can easily be obtained by reading the historical information.

In the above-mentioned embodiment, the characteristic point data on the fingerprint is checked at the time of the fingerprint checking. Consequently, the time taken for the checking process can be more shortened than in the case where the image data itself of the fingerprint is checked.

While the application to the entrance management has been described above, the fingerprint checking system according to the present invention can also be applied to the management of paperless approval performed by a specific person, the management of computer use and the like. In the case where the present invention is applied to the management of computer use, a signal indicative of the coincidence/non-coincidence of the result of checking can be utilized as a switch output for controlling power on/off, keyboard activation, an access to a floppy disk, a connection to a network and the like.

In the fingerprint checking system according to the present invention, as described above, the registered fingerprint information is only written to the memory card and does not leak out. Furthermore, other people cannot read the fingerprint information written to the memory card. Therefore, it is possible to eliminate the user's anxiety that his (or her) own registered fingerprint information might be abused. As a result, it is possible to contribute to development and wide use of the fingerprint checking system using the fingerprint which can identify a person correctly and easily.

## Claims

1. A fingerprint checking system for checking registered fingerprint information and detected fingerprint information, characterized by comprising:
a memory card (1) for registering encoded fingerprint information;
a fingerprint detecting section (4) for detecting fingerprint information;
a card reader (2) for reading and decoding the fingerprint information registered in said memory card (1); and
a deciding section (3) for deciding coincidence/non-coincidence of the detected fingerprint information and the read and decoded fingerprint information and for outputting a result of the decision.

2. The fingerprint checking system according to Claim 1, wherein said card reader (2) and said deciding section (3) are constituted by a semiconductor integrated circuit and are formed into one chip.

3. The fingerprint checking system according to Claim 1 or 2, wherein the result of the decision becomes a signal for controlling on/off of operation of an external apparatus.

4. The fingerprint checking system according to any of Claims 1 to 3, further comprising a card writer (6) for writing historical information about a process of reading fingerprint information to said memory card (1).

5. The fingerprint checking system according to any of Claims 1 to 4, further comprising:
an input section (5) for inputting a password to said card reader (2); and
a deciding section (2, S13) for deciding whether or not the password input to said card reader (2) is a predetermined one,
wherein said card reader (2) reads fingerprint information from said memory card (1) if the predetermined password is input to said card reader (2).

6. The fingerprint checking system according to any of Claims 1 to 5, wherein said memory card (1) is a non-contact type card capable of performing a process of reading and writing information between a reader and a writer in non-contact.

7. A memory card (1) to be used in a fingerprint checking system for checking registered fingerprint information and detected fingerprint information, wherein the fingerprint information is encoded and registered.

8. The memory card (1) according to Claim 7, wherein said memory card (1) is a non-contact type card capable of performing a process of reading and writing information between a reader and a writer in non-contact.

9. A fingerprint checking method characterized by comprising the steps of:
registering (S2 to S5) encoded fingerprint information in a memory card (1);
reading and decoding (S14 to S16) the fingerprint information registered in the memory card (1);
detecting (S18) fingerprint information; and
deciding (S19 to S21, S23) coincidence/non-coincidence of the detected fingerprint information and the read and decoded fingerprint information and outputting a result of the decision.

10. The fingerprint checking method according to Claim 9, wherein the result of the decision becomes a signal for controlling on/off of operation of an external apparatus.

11. The fingerprint checking method according to Claim 9 or 10, further comprising the step of:
writing (S17) historical information about a process of reading fingerprint information to the memory card (1).

12. The fingerprint checking method according to any of Claims 9 to 11, wherein fingerprint information is read from the memory card (1) if an input password is a predetermined one (S14).

13. The fingerprint checking method according to any of Claims 9 to 12, wherein the memory card (1) is a non-contact type card capable of performing a process of reading and writing information between a reader and a writer in non-contact.
